**Europäisches Patentamt**

**European Patent Office**

**Office européen des brevets**

(19)

(11) Veröffentlichungsnummer : **0 146 531 B1**

(12) **EUROPÄISCHE PATENTSCHRIFT**

(45) Veröffentlichungstag der Patentschrift :
19.10.88

(51) Int. Cl.⁴ : **B 01 D   1/22, B 01 D 45/14**

(21) Anmeldenummer : **84890245.8**

(22) Anmeldetag : **13.12.84**

(54) **DÜnnschichttrockner für fliessfähige Stoffe.**

(30) Priorität : **16.12.83 AT 4398/83**

(43) Veröffentlichungstag der Anmeldung :
**26.06.85 Patentblatt 85/26**

(45) Bekanntmachung des Hinweises auf die Patenterteilung : **19.10.88 Patentblatt 88/42**

(84) Benannte Vertragsstaaten :
**AT BE CH DE FR GB IT LI NL SE**

(56) Entgegenhaltungen :
DE-A- 1 944 466
DE-A- 2 830 874
FR-A- 1 047 794
FR-A- 2 379 305
GB-A- 2 021 426
GB-A- 2 077 414
US-A- 2 208 466
US-A- 3 654 981

(73) Patentinhaber : Österreichisches Forschungszentrum Seibersdorf Ges.m.b.H.
Kramergasse 1
A-1010 Wien (AT)

VEREINIGTE EDELSTAHLWERKE AKTIENGESELL-
SCHAFT (VEW)
Elisabethstrasse 12
A-1010 Wien (AT)

(72) Erfinder : Winkelhofer, Walter, Dipl.-Ing.
Bernardgasse 12/1o
A-1070 Wien (AT)
Erfinder : Einramhof, Friedrich

A-2451 Mannersdorf (AT)
Erfinder : Leichter, Peter
Saikogasse 8/59/7/15
A-1220 Wien (AT)
Erfinder : Knotik, Karl, Dr.
Jägergasse 14
A-7000 Eisenstadt (AT)

EP 0 146 531 B1

Jouve, 18, rue St-Denis, 75001 Paris, France

**Beschreibung**

Die Erfindung betrifft einen Trockner, insbesondere vertikaler Dünnschichttrockner, zum Trocknen von fließfähigen Stoffen, der einen Einspeisebereich, einen beheizten Trockenbereich und einen Brüden-Dampfbereich und einen diese Bereiche durchsetzenden Rotor aufweist, wobei die Rotorwelle in dem Einspeisebereich einen mit ihr umlaufenden bis nahe an die Trocknerwand reichenden Verteilerring trägt, mit dem die im Einspeisebereich eingespeisten fließfähigen Stoffe auf der Innenwand des Trockners verteilt werden und durch dessen als Durchtrittsöffnung ausgebildeten Innenraum die beim Trocknen der Stoffe entstehenden Dämpfe und/oder Gase aus dem unterhalb des Verteilerringes gelegenen Trockenbereich in den oberhalb des Verteilerringes gelegenen Brüden-Dampfbereich strömen.

Aus der DE-A-19 44 466 ist eine Rotations-Filmkolonne bekannt, die nach dem Prinzip der partiellen Verdampfung und Kondensation arbeitet und aus einem heizbaren Kolonnenmantel, in welchem sich ein kühlbarer Flügelrotor befindet, besteht. An dem Flügelrotor sind zwischen den Wischerflügeln in bezug auf den aufsteigenden Dampfstrom horizontal verlaufende Verengungsplatten angebracht. Aus der FR-A-1 047 794 ist eine rotierende Trenneinrichtung bekannt, bei der die aufsteigenden Gase durch horizontale Lochböden geführt werden. Die US-A-3 654 981, 2 208 466 und die GB-A-2 077 414 zeigen herkömmliche Verdampfer ebenfalls ohne Einrichtungen zur Verbesserung der Abscheidewirkung im Brüden-Dampfbereich. Die FR-A-2 379 305 zeigt Abschabeinrichtungen für die Wand eines Dünnschichtverdampfers.

Aus der DE-A-28 30 874 ist ein Dünnschichtbehandlungsapparat, insbesondere Dünnschichtverdampfer bekannt, mit einem Rotor mit Welle und einer um diesen angeordneten rotationssymmetrischen Wandung, wobei der Rotor im Zufuhrbereich des einzudampfenden Materials bis zur Wandung reichende im wesentlichen radiale elastisch federnde Abstreifelemente aufweist. Die Abstreifelemente sind in an sich bekannter Weise blattförmig ausgebildet, wobei diese und der Rotor zumindest teilweise mit einem elastomeren Material beschichtet sind, um eine Ablagerung von Teilchen darauf zu verhindern. Es ist ferner vorgesehen, daß die Abstreifelemente mit dem Rotor beweglich verbunden sind. Aus der GB-A-2 021 426 sind schließlich mit dem Rotor eines Verdampfers mitrotierende horizontale Platten bekannt.

Bei Trocknern bzw. Verdampfern, insbesondere Dünnschichttrocknern, die nach dem Prinzip von Dünnschichtverdampfern arbeiten, werden dünne Schichten des zu trocknenden Mediums auf beheizte Flächen vorzugsweise kontinuierlich aufgebracht, wo die verdampfbare Komponente, zumeist unter zusätzlicher Einwirkung von Vakuum, in die Gasphase überführt wird. Gegebenenfalls bei Dünnschichtverdampfern, aber immer bei Dünnschichttrocknern, verbleibt eine mehr oder weniger stabile Schicht von festen Rückständen auf der Heizfläche. Diese Schicht wird kontinuierlich von der Heizfläche entfernt, womit sich der prinzipielle Aufbau eines Dünnschichttrockners wie folgt ergibt. Eine rotationssymmetrisch um einen Rotor samt Abstreifelementen angeordnete Heizfläche trocknet mit Hilfe der durch den Rotor bzw. einen Verteilerring erzeugten Fliehkräfte in dünnen Schichten das durch eine Einspeiseleitung eingebrachte Medium. Von der Heizfläche wird mittels der auf der Rotorwelle innerhalb des Verteilerringes montierten Abstreifelemente der trockene Rückstand laufend entfernt. Bei senkrechter Aufstellung des Trockners rieselt das von der Heizfläche kontinuierlich abgetragene Festmaterial abwärts, so daß sich das Festmaterial sammelt und ausgetragen werden kann. Für ein klagloses Funktionieren eines Trockners ist vor allem der Aufbau des Rotors maßgeblich. Dieser muß die Verteilung des Mediums in gleichmäßig dünne Schichten auf der beheizten Trocknerwand durchführen, das daraus resultierende Trockenprodukt von der Trocknerwand möglichst kontinuierlich und vollständig entfernen und so adaptiert sein, das krustenförmigen Ablagerungen auf den Rotorkomponenten selber, dem Verteilerring und den Abstreifelementen weitgehend vermieden werden. Weiters ist es vorteilhaft, wenn durch eine geeigenete Rotorausführung dafür gesorgt wird, daß die beim Trocknen entstehenden meist feinteiligen Feststoffe im Trockenbereich einwandfrei vom abdampfenden Flüssigmedium abgetrennt und möglichst quantitativ aus dem Trockenbereich ausgetragen werden können. D. h., es muß dafür gesorgt werden, daß tunlichst kein Feststoff in Form von Staubpartikeln vom abgehenden Dampf bzw. Gas mitgerissen wird und erst in den peripheren Anlagen des Trockners abgelagert wird.

Ziel der vorliegenden Erfindung ist es, einen Trockner der eingangs genannten Art so auszugestalten, daß die an ihn gestellten Forderungen verwirklicht werden können, nämlich zu vermeiden, daß durch den abströmenden Dampf bzw. das abströmende Gas signifikante Anteile des Trockenproduktes in Form von Staubpartikeln mitgerissen und aus dem Trockner ausgetragen werden. Erfindungsgemäß wird dies dadurch erreicht, daß im Brüden-Dampfbereich des Trockners zum Zurückhalten von mit Brüdendämpfen mitgeführten Feststoffanteilen im Trockner auf der Rotorwelle nahe an die Trocknerwand heranreichende Staubabscheideelemente angebracht sind, die in bezug auf die Rotorachse geneigt oder senkrecht verlaufende Flächen besitzen und mit der Rotorwelle elastisch verbunden oder an dieser beweglich gelagert sind und während des Betriebes durch die Rotation der Rotorwelle in eine schüttelnde, schwingende und/oder vibrierende Bewegung versetzbar sind.

Die Erfindung betrifft somit einen Trockner, insbesondere einen vertikalen Dünnschichttrockner, dessen Aufgabe gegenüber den üblichen Trocknern darin besteht, die beim Trockenvorgang entstehenden staubförmigen Feinanteile, die normalerweise mit den abziehenden Brüden abgeführt werden, möglichst quantitativ im Trocknergehäuse zurückzuhalten, mit dem eigentlichen Trockenprodukt zu vereinigen, mit diesem gemeinsam aus dem Trockner anlagengemäß auszuführen und damit die Ausbeute zu erhöhen.

Hiezu wird der vertikal montierte zylindrische Trocknermantel in einen unteren beheizten Trocknerbereich und in einen darüber befindlichen unbeheizten Dampf-Brüdenbereich unterteilt, wobei sich zwischen diesen Zonen der Einspeisebereich befindet, wo das zu trocknende Material in die Anlage eingefördert wird. Über die gesamte Länge im Inneren des zylindrischen Trocknermantels ist der Rotor des Trockners rotationssymmetrisch montiert. Auf der Rotorachse sind entsprechend den drei Zonen (von unten nach oben : Trocknerbereich, Einspeisebereich, Dampf-Brüdenbereich) die für die Funktion erforderlichen Rotorelemente angebracht. Im beheizten Trocknerbereich sind dies Abstreifelemente, die notwendig sind, um das durch die Fliehkräfte des Rotors über den Verteilerring auf den heißen Trocknermantel aufgebrachte Medium zu dünnen Schichten auszuspreiten und nach dem Trocknen laufend zu entfernen. Das dabei abgetragene Trockenprodukt rieselt bei vertikalem Aufbau des Trockners abwärts, von wo es gesammelt und ausgetragen wird.

Der beim Trocknen entstehende Dampf entweicht nach oben und nimmt dabei staubförmige Feinanteile mit. Damit dieser Dampf beim Durchgang durch den Verteilerring nicht kondensiert und hier die Feinanteile ablagert und den Verteilerring verkrustet — der Verteilerring wird durch das zugeförderte Medium dauernd gekühlt —, wird dieser erfindungsgemäß im inneren Bereich wärmeisoliert und/oder beheizt und/oder mit Kunststoff beschichtet.

Im Dampf-Brüdenbereich wird der aus dem Trocknerbereich über den Verteilerring einströmende Dampf durch erfindungsgemäße, an der Rotorwelle beweglich befestigte, geneigte Flächen aufweisende Staubabscheideelemente in erhöhte Turbulenz versetzt, wobei die Staubpartikel vergröbert und auf den Staubabscheideelementen abgelagert werden, bzw. direkt abwärts rieseln. Die durch die am Rotor im Trocknerbereich befestigten Abstreifelemente verursachten Erschütterungen werden über den Rotor als Schüttelbewegungen auf die beweglichen Staubabscheideelemente übertragen, so daß die hier abgeschiedenen Staubbeläge abgeschüttelt werden und zerkleinert nach abwärts rieseln. Die so aus den Stäuben erhaltenen Festanteile gelangen durch den erfindungsgemäß ausgerüsteten, trockenen Innenbereich des Verteilerringes, bzw. außen über die Einspeisungszone wieder zurück in den Trocknerbereich und werden mit dem produzierten Trockenprodukt vereinigt. Durch eine entsprechende Temperatureinstellung im Arbeitsablauf wird die Tröpfchenbildung beim aufsteigenden Dampf und damit eine Ausbildung von feuchten Klumpen mit den mitgeführten Stäuben im Dampf-Brüdenbereich verhindert, so daß durch die erfindungsgemäßen Maßnahmen die erhöhte Trockenproduktausbeute erzielt wird.

Der erfindungsgemäße Trockner unterscheidet sich somit von seinem Einsatzzweck bzw. seiner Aufgabe und auch vom Aufbau her von den bekannten Einrichtungen, von denen keine für eine Abscheidung von festen Teilchen einsetzbar ist ; eine Vergröberung der Staubpartikel und ein Abschütteln der Teilchen zurück in den Trockenbereich ist mit ihnen nicht durchführbar. Im Brüden-Dampfraum sind bei den bekannten Einrichtungen keine Abscheideelemente für Staubpartikel vorgesehen, womit der prinzipielle Aufbau dieser Einrichtungen völlig anders ist.

Feststoffe verhalten sich im Vakuum und bei Hitze völlig anders als Flüssigkeiten, so daß die bekannten Vorrichtungen zur Abscheidung von Flüssigkeitströpfchen nicht mit der erfindungsgemäßen Vorrichtung vergleichbar sind, bei der der Staub auf den Abscheideelementen vorerst angelagert wird, dann sich vergröbert und schließlich abgeschüttelt wird ; die erfindungsgemäße Einrichtung gehört somit einer anderen Gattung von Apparaten an. Mit der für Tröpfchen gedachten Abscheidevorrichtung gemäß der GB-A-2 021 426 ist eine Abscheidung von Staubteilchen nicht gut möglich, da sich die nur für Tropfenabscheidung geeigneten Elemente verkleben bzw. zusetzen würden. Die GB-A- betrifft zudem einen Verdampfer und keinen Trockner. Die DE-A-28 30 874 betrifft beweglich gelagerte Abstreifelemente, wie sie im Zufuhrbereich der zu trocknenden Substanz im Trockner vorgesehen werden ; mit Staubabscheideelementen haben diese Abstreifelemente nichts gemeinsam und besitzen eine völlig andere Wirkungsweise.

Mit den erfindungsgemäßen Staubabscheideelementen wird dem abströmenden Dampf eine erhöhte Turbulenz bzw. dem Staub eine Zentrifugalbeschleunigung vermittelt, so daß die Trockenproduktpartikel abgefangen, vergröbert und in den eigentlichen Trockenbereich rückgeführt werden können.

Bei einer besonders vorteilhaften Ausführungsform eines Trockners ist vorgesehen, daß zur Vermeidung der Kondensation bzw. Ablagerung der den Verteilerring durchströmenden Dämpfe oder Gase oder von von diesen mitgeführten Feststoffen an den innen gelegenen Flächen des Verteilerringes der Innenraum und/oder die Innenwände des Verteilerringes gegenüber seiner Außenwandung wärmeisoliert und/oder beheizbar sind und/oder die Innenwände des Verteilerringes aus wärmeisolierendem Material bestehen. Durch diese erfindungsgemäße Ausbildung der Verteilerringes in der Einspeisezone des Trockners wird vermieden, daß es durch das eingeförderte kalte Medium zu einer Kondensation des abströmenden Dampfes und/oder Gases kommt ; somit können der Innenraum bzw. die Abströmöffnungen für den Dampf bzw. das Gas innerhalb des Verteilerringes von feuchten Ablagerungen freigehalten werden und der Dampf bzw. das Gas aus diesem Bereich ungehindert in den Brüden-Dampfbereich abströmen.

Bevorzugte Ausführungsformen der Erfindung werden in den Unteransprüchen wiedergegeben und werden anhand der Zeichnung in der folgenden Beschreibung beispielsweise näher erläutert. Es zeigen : Fig. 1 eine Schnittansicht durch eine Ausführungsform eines Trockners, Fig. 2, 2a, 3, 3a, 4, 4a und 4b verschiedene Ausführungsformen eines Verteilerringes teilweise im Schnitt und Fig. 5-12 verschiedene Ausführungsbeispiele von Staubabscheideelementen.

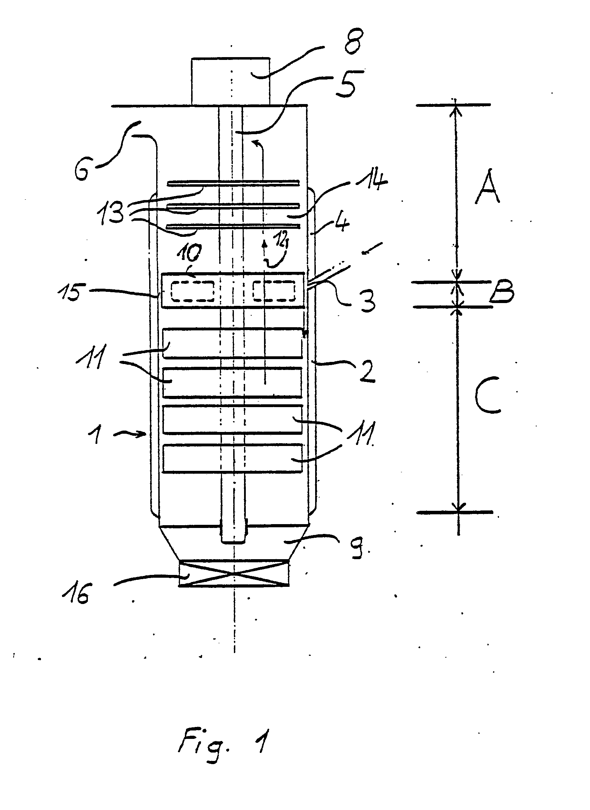

Fig. 1 zeigt einen Dünnschichttrockner 1, der vorteilhafterweise vertikal aufgebaut ist und an sich zumeist zylindrische Umfangsform besitzt. Ein beheizbarer zylindrischer Trocknermantel 2 weist eine Mediumeinspeiseöffnung 3 auf und ist über diese hinaus nach oben verlängert. Diese Verlängerung 4 kann ebenfalls zylindrisch sein, aber auch eine steile nach oben sich erweiternde Kegelmantelform aufweisen, die einen einfachen Ausbau des Rotors bzw. der Rotorwelle 5 nach oben ermöglicht. Diese Verlängerung 4, die ca. 20-50 % der Gesamtlänge des Trockners 1 entsprechen kann, muß nicht beheizt werden, es genügt eine wirkungsvolle Wärmedämmung gegenüber der Umgebung, die eine Kondensation der Mediumdämpfe bzw. Gase innerhalb bzw. auf der Innenwand der Verlängerung 4 verhindert. Am oberen Ende dieser Verlängerung befindet sich ein Dampfauslaß 6. Den Abschluß bildet ein entsprechender flacher oder gewölbter Flansch mit einer mit einer Gleitvorrichtung versehenen Durchführung für die Rotorwelle 5, die durch einen Antrieb 8 von oben her in Rotation versetzt wird. Der Rotor, der über die gesamte Länge des Trockners 1 reicht, wirkt in den drei funktionalen Bereichen des Trockners, dem Trockenbereich C, dem Einspeisebereich B und dem Brüdendampfbereich A funktionsgerecht und besteht aus der Rotorwelle 5, den Abstreifelementen 11 im Trockenbereich C, einem Verteilering 10, der zumindestens teilweise im Einspeisebereich B gelegen ist, und Staubabscheideelementen 13 im Dampfbereich A. Auf den unteren, beheizten, eigentlichen Trockenbereich C, in dem die Abstreifelemente 11 angeordnet sind, wird im Zusammenhang mit der vorliegenden Erfindung nicht im Detail eingegangen, da eine entsprechende Ausbildung des Rotors in diesem Bereich aus der US-A-4 208 243 bekannt ist.

Die im beheizten Trockenbereich C produzierten Dämpfe und/oder Gase werden nach oben aus diesem abgeführt und passieren dabei den durch das kalte Einspeisemedium dauernd gekühlten Verteilerring 10, der dafür sorgt, daß das Medium bzw. die zu trocknenden Stoffe möglichst gleichmäßig in dünnen Schichten auf den Heizmantel 2 des Trockners 1 aufgebracht werden. Der Dampf bzw. die Gase durchströmen im allgemeinen den inneren offenen Bereich des Verteilerringes 10 (Pfeil 12) und es ließ sich bisher kaum vermeiden, daß Anteile des Dampfes kondensieren und mit den mitgeführten Feinanteilen des Trockenproduktes zu einer betriebsstörenden Verengung der Durchgangsöffnungen im Verteilerring 10 führten, was jedoch durch die Ausbildung des Verteilerringes 10 vermieden wird.

Im Abdampfbereich A des Trockners 1 wird die Rotorwelle 5 mit Staubabscheideelementen 13 (in Fig. 1 schematisch dargestellt) bestückt, die eine erhöhte Turbulenz im Dampfstrom erzeugen und die durch geeignete Formgebung und Materialwahl dafür sorgen, daß sich die Staubteilchen weitgehend im Dampfraum 14 agglomerieren und an der Wand des Trockners 1 ablagern und wieder in den unteren Bereich rückgeführt werden können. Die Ausbildung des Verteilerringes 10 im Einspeisebereich B und die Staubabscheideelemente 13 im Dampfbereich A haben den Zweck, den getrockneten Feststoff möglichst quantitativ im Trockenbereich C zu konzentrieren und in der gewünschten Weise, zumeist entsprechend der Gravitation nach unten, in einen Trockenraum 9 für trockenen Feststoff zu bringen, aus dem der Feststoff durch eine Schleuse 16 ausgetragen wird. Dadurch wird verhindert, daß der nach oben aus dem Trockner 1 abgeführte Dampf wesentliche Feststoffanteile mit sich führt und damit die folgenden Dampfleitungen, Brüdenwäscher, Kondensator usw. übermäßig belastet. Eine Forderung, die ganz besonders bei der Trocknung und Konditionierung von bioschädlichen bzw. toxischen Abfällen berücksichtigt werden muß.

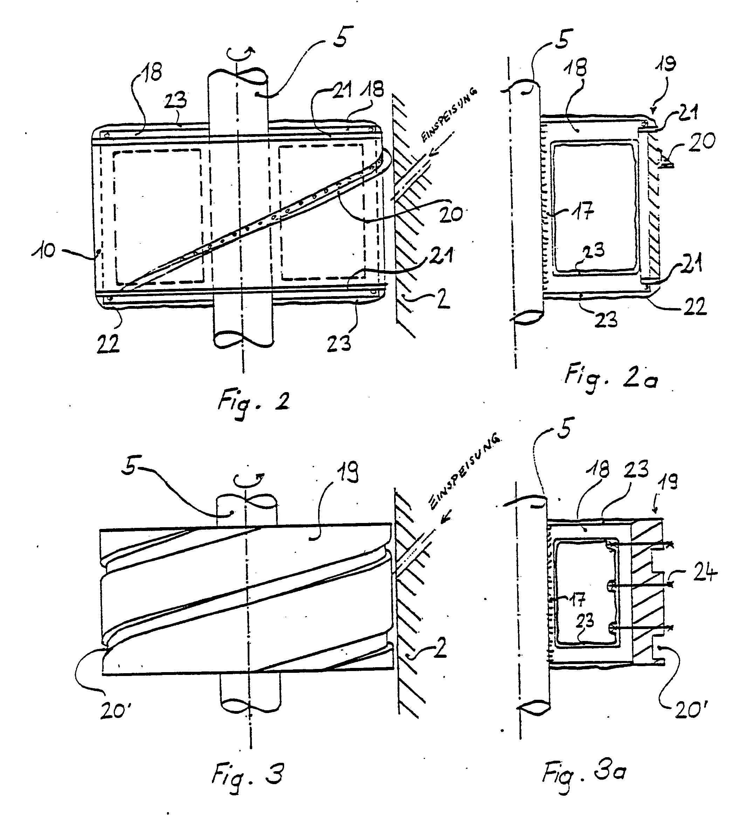

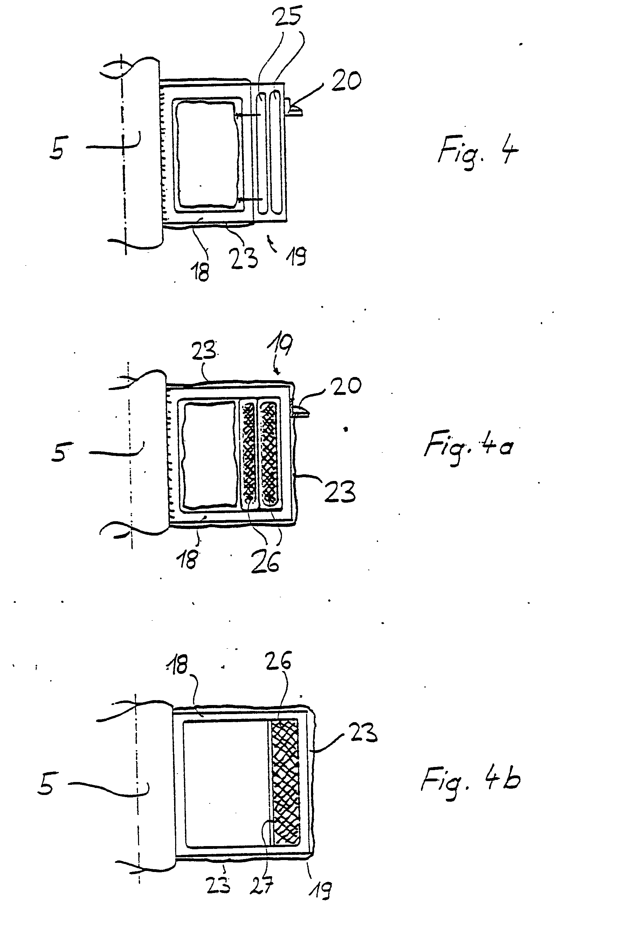

Fig. 2 und 3 zeigen beispielhafte Ausführungsformen des Verteilerringes 10, die einen möglichst unbehinderten Austritt des Dampfes bzw. Gases aus dem beheizten Trockenbereich C in den Dampfbereich A des Trockners 1 ermöglichen.

Prinzipiell besteht ein Verteilerring 10 aus einem tragenden, an der Rotorwelle 5 befestigten Hülsenteil 17, von dem Träger bzw. Stege 18 abgehen, die einen Ringteil 19 tragen, der seinerseits ein Verteilelement 20 trägt.

Um eine Teilkondensation des Dampfes, mit allen seinen Folgen, an den durch die Einspeisung gekühlten, mit dem durchströmenden Dampf in Berührung kommenden innenliegenden Flächen des Verteilerringes 10 zu verhindern, kann der Ringteil 19 aus korrosionsfesten, thermostabilen, schlecht wärmeleitenden Kunststoffen z. B. Fluorplastomeren, Silikonkunststoffen, die zur Erhöhung der mechanischen Stabilität vorteilhafterweise mit Fasern und/oder Geweben verstärkt sind (z. B. Glasfasern), ganz oder teilweise hergestellt sein bzw. damit beschichtet, verkleidet oder überzogen sein.

In den Fig. 2, 2a, 3 und 3a erkennt man, daß der Ringteil 19 von z. B. 3 bis 6 speichenförmigen an der Rotorwelle 5 fest montierten (z. B. angeschweißt, festgeschraubt) oder von dem Hülsenteil 17 abgehenden Stegen 18 getragen ist. Die Befestigung des Ringteiles 19 erfolgt z. B. durch Aufschieben des Ringteiles 19 auf die senkrechten Stege 18, wobei diese in nutenförmigen Aussparungen im Ringteil 19 eingreifen. Nach oben und unten wird der Ringteil 19 stirnseitig mit einem Stahlring 21 bedeckt, der gleichfalls mit Schlitzen in die Stege 18 einrastet und gegen ein Herausgleiten aus den Stegen 18 mit eingeschraubten oder splintförmig befestigten Stiften 22 fixiert ist. Die Oberflächen der Metallteile im Inneren des Verteilerringes 10, d. h. die Rotorwelle 5, die Stege 18, die Hülse 17, die Stahlringe 21 und die Innenflächen des Ringteiles 19, sofern dieser aus Metall besteht, sind zur besseren Wärmeisolierung mit einer Kunststoffschicht 23, z. B. Fluorplastomeren, oder einer Keramikschicht beschichtet. An der äußeren Peripherie des Ringteiles 19 werden zweckmäßigerweise bis nahe an den Trocknermantel 2 reichende, schraubenförmig angeordnete Abstreifelemente 20 befestigt, die das eingeförderte Medium zwangsweise aus dem Einspeisebereich 13 nach unten in den beheizten Trockenbereich C fördern und auf den Ringteil 19 aufgesetzt, z. B. geschraubt, genietet oder in vorgefräste Nuten integriert und fixiert sind.

Fig. 3 und 3a zeigen eine weitere mögliche Ausführungsform eines Verteilerringes 10. Der Ringteil 19 besteht aus einem Kunststoffkörper, der schraubenförmige Ausnehmungen 20' an der äußeren Zylinderfläche aufweist, die das Medium funktionsgerecht verteilen. Die Befestigung des Ringteiles 19 an den speichenförmigen. Stegen 18 erfolgt beispielsweise durch Schrauben 24 oder Nieten, wobei die Stege 18 mit Laschen versehen oder Rahmenform haben können und mit dem Ringkörper 19 verbunden werden. Auch hier werden alle Metalloberflächen der Rotorwelle 5 und der tragenden Stege 18 mit einer geeigneten Beschichtung versehen, um eine Dampfkondensation und Feststoffablagerung zu vermeiden. Der Innenraum des Verteilerringes 10 ist durch den Ringkörper 19 bildenden Kunststoffkörper sowie durch die Beschichtung der Stege 18 gegen die Abkühlung durch das eingespeiste Medium wärmeisoliert, womit eine Kondensation der Brüdendämpfe auf kalten Oberflächen verhindert wird.

Fig. 4 zeigt einen Verteilerring 10 mit einem Ringkörper 19, der von metallischen mit einer Kunststoffschicht 23 überzogenen Stegen 18 getragen ist und der in seinem Innenraum zur Wärmeisolation umlaufende Kammern bzw. Hohlräume 25 aufweist.

Fig. 4a zeigt einen Verteilerring 10, dessen metallischer Ringkörper 19 bzw. dessen Außenseite mit einer Schicht 23 aus Kunststoff oder Keramik beschichtet ist. Auf seiner Innenseite ist ein Ringkörper mit einer oder mehreren Kammern 26 angeordnet, die Wärmedämmstoffe, z. B. Glaswolle, Kunstharzschaum, Asbest, u. s. w. enthalten. Die Stege 18, die Hülse 17 und gegebenenfalls die Rotorwelle 5 sind wiederum mit einer Beschichtung 23 aus Kunststoff oder Keramik versehen.

Fig. 4b zeigt einen Verteilerring 10 mit einem von metallischen Stegen 18 getragenen metallischen Ringkörper 19, wobei die Stege 18 und die Außenseite des Ringkörpers 19 mit einer Beschichtung 23 versehen sind. Von den Stegen 18 ist ferner eine Trennwand bzw. Abschirmung 27 aus Kunststoff oder Keramik getragen, wobei zwischen dem Ringkörper 19 und der Abschirmung 27 eine Wärmedämmschicht 26 angeordnet ist.

Eine gummielastische Kunststoffbeschichtung 23 hat neben der Wärmedämmung noch den Vorteil, daß ein Festkleben allenfalls kondensierter Teilchen durch die Elastizität der Kunststoffbeschichtung verhindert wird und die Teilchen durch die Eigenbewegung, z. B. Vibration, der Beschichtung abfallen.

Die Dicke der Beschichtung bzw. der Wärmedämmung wird derart bemessen, daß die Temperatur des Innenraumes des Verteilerringes derart angehoben wird, daß sie bei dem im Trockner herrschenden Druck oberhalb der Kondensationstemperatur der Dämpfe bzw. Gase liegt.

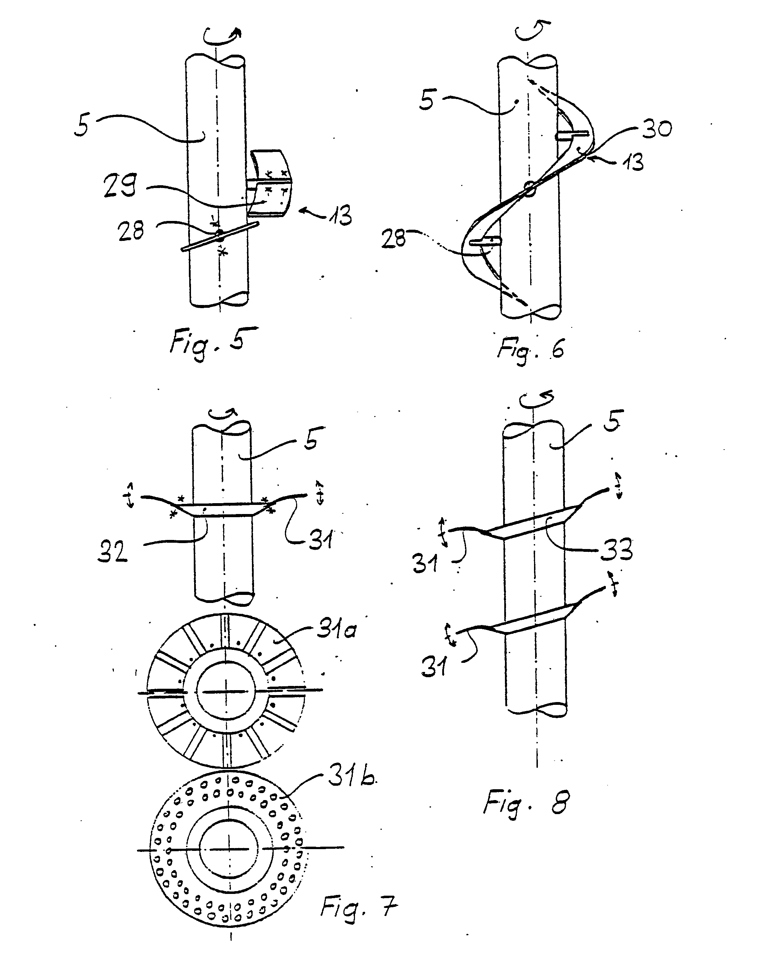

In den Fig. 5-12 werden Beispiele für die Ausrüstung des Rotors im Dampf-Brüdenbereich A aufgezeigt, wie sie erfindungsgemäß zur Abtrennung von Staubteilen in den abströmenden Dämpfen und/oder Gasen vorgesehen sind. Fig. 5 zeigt ein Beispiel für Staubabscheideelemente 13, welche von mechanisch ausreichend stabilen schraubenförmig angeordneten Segmenten 29, z. B. aus kunststoffbeschichtetem Stahlblech oder faserverstärkten Plastomeren gebildet sind, die mit verstellbaren elastischen bzw. federnden Halterungen 28 an der Rotorwelle 5 befestigt werden und bis nahe an die Trocknerwand 2 reichen. Während des Betriebes werden die Randzonen der Segmente 29 durch die Bewegung der Rotorwelle 5 in zitternde Bewegung versetzt, wodurch auftreffende Staubteilchen aus dem turbulenten Dampfstrom abgetrennt und über den Verteilerring 10 in den eigentlichen Trockenbereich C zurückgebracht werden können. Als Halter bzw. Halterungen 28 für die Segmente 29 können z. B. geschlitzte, prismatische oder zylindrische Bauteile aus Kunststoff oder Edelstahl vorgesehen werden, die in der Rotorwelle 5 vorgesehene z. B. eingeschraubte, federnde bzw. elastische Einsätze eingesteckt, entsprechend justiert und durch Schrauben fixiert werden können. Die Halterungen 28 können wie die Segmente 29 beschichtet werden. Die Flächen der Segmente 29 steigen in Richtung der Drehrichtung der Rotorwelle 5 an, wobei der Anstieg durch Verdrehen der Segmente 29 veränderbar ist.

Eine ähnliche Ausführungsform zeigt Fig. 6. Ein nahe an die Trockenwand 2 reichender, wendelförmig an der Rotorwelle 5 durch einen Spalt abgesetzter befestigter Streifen 30 ist hier nicht wie in Fig. 5 in relativ kurze Segmente unterteilt, sondern er verläuft z. B. in ca. 2-6 Windungen über die gesamte Länge der Rotorwelle 5 im Dampfbereich A, wobei er um seine Steifheit zu verringern, gegebenenfalls z. B. an 1 bis 3 Stellen geschlitzt oder unterbrochen werden kann. Als Material für den Wendelstreifen 30 eignet sich z. B. mit Elastomeren beschichtetes Stahlblech oder faserverstärkte Streifen aus Plastomeren, so daß eine gewisse Vibration der Streifen während des Betriebes gewährleistet ist, um ein Ansetzen der Staubteilchen zu verhindern. Die Befestigung bzw. die Halterungen 28 bzw. die Einsätze für die Halterungen 28 an der Rotorwelle 5 sind nach Möglichkeit nicht starr ausgeführt. Geschlitzte Halterungen 28, in die der bzw. die Wendelstreifen 30 eingesetzt und fixiert werden, können, wie zuvor beschrieben, mit den in der Rotorwelle 5 eingeschraubten oder daran angeschweißten Einsätzen über ein Gelenk oder eine kurze Spiralfeder oder einen Gummibolzen verbunden werden, womit ein Abschütteln gefangener Staubanteile beim Betrieb gefördert und deren Vereinigung mit der Hauptmenge des Trockenproduktes ermöglicht wird. Natürlich können gleichlaufend bzw. versetzt oder parallel zueinander zwei bis drei und auch mehr Wendelstreifen 30 montiert werden.

In Fig. 7 wird eine andere mögliche Ausführungsform der Staubabscheideelemente 13 gezeigt. Dabei werden durchbrochene Scheiben 31 aus kunststoffbeschichtetem Stahlblech oder aus ausreichend mechanisch stabilen Plastomeren geschlitzt (31a) oder gelocht (31b) und derart mit angeschraubten oder geschweißten vorteilhafterweise federnden Laschen 32 an der Rotorwelle 5 befestigt daß sie leicht gewölbt oder horizontal bis nahe an die Trocknerwand 2 heranreichen. Durch gegenseitiges Verdrehen der Scheiben 31 kann eine Art Schikane durch die versetzten Öffnungen in übereinander liegenden Scheiben 31a, 31b vorgesehen werden, um die Turbulenz des abströmenden Dampfes zu erhöhen. Die Scheiben 31 sind so ausgeführt, daß die gegen die Trocknerwand gerichteten Ränder relativ dünn sind, so daß während des Betriebes durch Vibration die auf einer Scheibe 31 abgelagerten Staubteilchen gelockert und durch die Fliehkraft an die Trocknerwand 2 gelenkt werden. Von dort werden die Staubteilchen, wie oben bereits beschrieben, in den eigentlichen Trockenbereich C zurückgebracht.

Der Oberteil der Rotorwelle 5 entsprechend Fig. 8 ist im Prinzip mit den gleichen Scheiben 31 ausgerüstet wie die Rotorwelle 5 in Fig. 7. Da die Scheiben 31 gegenüber der Achse der Rotorwelle 5 in schrägen Halterungen 33 befestigt sind, entsteht während der Rotation als Folge der taumelnden Bewegung eine besonders intensive Turbulenz und eine zusätzliche Auf-Ab-Bewegung zur bereits erwähnten Vibration. Abgelagerte Staubteilchen werden dadurch wieder als vergröberte Körner abgeschüttelt und wie schon beschrieben über die Trocknerwand nach unten zur Hauptmenge des Trockenproduktes gefördert.

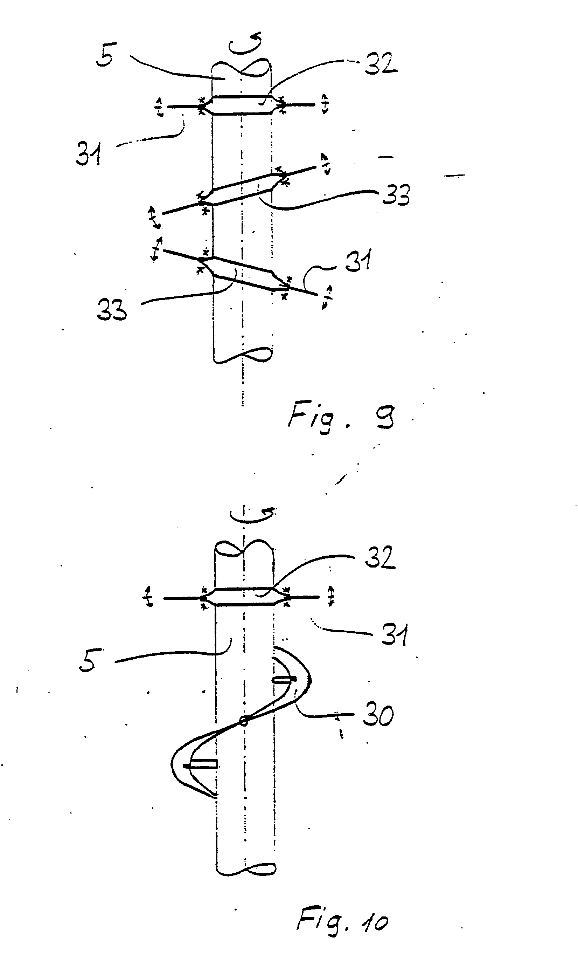

Als weitere Variante zur Ausführung der Fig. 7 zeigt Fig. 9 die Kombination von horizontalen Halterungen 32 und gegeneinander schief stehenden Halterungen 33, ausgerüstet mit nahe an die Trocknerwand 2 reichenden, diese aber nicht berührenden Scheiben 31. Wenn die schrägen Scheiben 31 in der Mitte der Rotorwelle 5 und die horizontalen, vorteilhafterweise leicht gewölbten Scheiben 31 in dessen oberen und unteren Bereich angeordnet werden, ergibt sich eine besonders vorteilhafte Kombination. Die untere Scheibe 31 verhindert, daß Staubanteile von der Rotorwelle 5 direkt in die inneren Abdampföffnung des Verteilerringes 10 gelangen, die obere Scheibe 31 sperrt besonders vorteilhaft den Austritt von feinsten Staubteilchen in die Abdampf- bzw. Brüdenleitung des Trockners 1.

Vorteilhafterweise kann die Scheibenlochung bzw. -schlitzung durch Auspressen erfolgen, wobei vorteilhafterweise in Drehrichtung nacheilende Loch- bzw. Schlitzränder gegenüber der Scheibenebene erhaben ausgebildet sind.

Fig. 10 zeigt die Möglichkeit einer Kombination von Scheiben 31 mit Wendeln 30. Die Befestigung erfolgt wie bereits beschrieben. Auch hier empfiehlt es sich, die Scheiben 31 im oberen und unteren Bereich der Rotorwelle 5 im Dampfbereich A anzubringen, um besonders die Dampfeintrittsöffnung in den Dampfraum A und die Dampfaustrittsöffnung 6 in die Brüdenleitung von Trockenproduktanteilen weitgehend frei zu halten. Es können mehrere parallele Wendel 30 um die Rotorwelle 5 montiert werden, um den gewünschten Effekt zu verstärken.

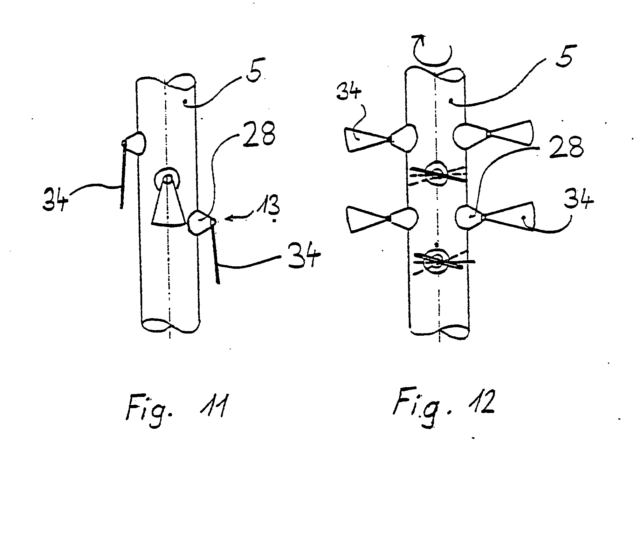

Fig. 11 und 12 zeigen Staubabscheideelemente 13, die von Flügeln 34 gebildet sind, die verschwenkbar sind und mit Gelenken in aufgeschraubten oder angeschweißten Halterungen 28 an der Rotorwelle 5 so befestigt sind, daß sie bei Rotation durch die Zentrifugalkraft gegen die Trocknerwand 2 gerichtet werden und nahe an sie heran reichen. Ihre Neigung in bezug auf eine zu der Rotorwelle 5 senkrechte Ebene und in Umdrehungsrichtung der Rotorwelle 5 ist wählbar und kann von einer vertikalen Lage über eine Schräglage bis zu einer horizontalen Lage reichen. Durch eine sich überdeckende Anordnung der Flügel 34 wird im unteren Teil des Dampfbereiches A der Innenraum des Verteilerringes 10 abgeschirmt, so daß die Dampfauslaßöffnungen von oben her nicht mehr Feststoffablagerungen verengt werden können. In den nach oben anschließenden Mittelteil des Dampfbereiches A kann durch geringere Schrägstellung der Flügel 34 eine abwärts und auswärts gerichtete Bewegung der Staubteilchen verwirklicht werden. Darüber kann durch geringe Schrägstellung der Flügel 34 eine abwärts und auswärts gerichtete Bewegung der Staubteilchen verwirklicht werden. Darüber kann im Dampfaustrittsbereich A aus dem Trockner wieder durch eine horizontale Anordnung der Flügel 34 der direkte Dampfaustritt gestört und das Entweichen der Feststoffpartikel in die Abdampfleitung 6 soweit wie möglich verhindert werden. Als Material für die Flügel 34 empfiehlt es sich wie bei allen Staubabscheideelementen 13 mit Fluorplastomeren beschichteten Edelstahl oder gewebe- bzw. faserverstärkten Kunststoff zu verwenden, um das Festsetzen von Trockenprodukten an den während des Arbeitsprozesses vorteilhafterweise auf Grund der federnden Halterungen schwingenden Blätter noch zusätzlich hintanzuhalten und die Dampfkondensation zu vermeiden. Bevorzugt ist es ferner, die Rotorwelle 5 selbst zumindest teilweise mit Plastomeren, fluorierten Kunststoffen oder Silikonkunststoffen zu beschichten, damit auch die Rotorwelle 5 wie die Staubabscheideelemente 13 und der Verteilerring 10 von Ablagerungen weitestgehend freigehalten werden kann. Weiters ist es vorteilhaft, die der Rotorwelle 5 zugewandte Oberfläche der Innenwand des Trockners im Brüden-Dampfbereich A mit einem geeigneten Plastomeren zu beschichten, so daß die an die Trocknerwand 2 geschleuderten Staubpartikel locker abfallen und über die Produkteinspeisung leicht in den Trockenbereich C zurückgefördert werden können.

Naturgemäß beschränkt sich die erfindungsgemäße Optimierung des vertikalen Dünnschichttrockners nicht nur auf die angeführten Beispiele. Erfindungsgemäß kann auch eine Beheizung des Verteilerringes 10 z. B. elektrisch oder mit Wärmeübertragungsöl, über Leitungen in der Rotorwelle 5 erfolgen. Ferner ist auch eine Kombination aus geeigneter Aufheizung bei gleichzeitiger Wärmeisolierung des Verteilerinnenraumes eine besonders vorteilhafte Ausführungsvariante des gegenständlichen Trocknerverteilerringes 10.

Alle diese Optimierungsmaßnahmen dienen letztlich einem Prinzip : Die möglichst vollständige Retention des getrockneten Materials, im Trocknerbereich bei möglichst geringer Belastung der übrigen angeschlossenen peripheren Anlagenteile.

**Patentansprüche**

1. Trockner, insbesondere vertikaler Dünnschichttrockner, zum Trocknen von fließfähigen Stoffen, der einen Einspeisebereich, einen beheizten Trockenbereich (C) und einen Brüden-Dampfbereich (A) und einen diese Bereiche durchsetzenden Rotor aufweist, wobei die Rotorwelle (5) in dem Einspeisebereich (B) einen mit ihr umlaufenden bis nahe an die Trocknerwand reichenden Verteilerring (10) trägt, mit dem die im Einspeisebereich (B) eingespeisten fließfähigen Stoffe auf der Innenwand des Trockners verteilt werden und durch dessen als Durchtrittsöffnung ausgebildeten Innenraum die beim Trocknen der Stoffe entstehenden Dämpfe und/oder Gase aus dem unterhalb des Verteilerringes (10) gelegenen Trockenbereich (C) in den oberhalb des Verteilerringes (10) gelegenen Brüden-Dampfbereich (A) strömen, dadurch gekennzeichnet, daß im Brüden-Dampfbereich (A) des Trockners zum Zurückhalten von mit Brüdendämpfen mitgeführten Feststoffanteilen im Trockner auf der Rotorwelle (5) nahe an die Trocknerwand heranreichende Staubabscheideelemente (13) angebracht sind, die in bezug auf die Rotorachse geneigt oder senkrecht verlaufende Flächen besitzen und mit der Rotorwelle elastisch verbunden oder an dieser beweglich gelagert sind und während des Betriebes durch die Rotation der Rotorwelle (5) in eine schüttelnde, schwingende und/oder vibrierende Bewegung versetzbar sind.

2. Trockner nach Anspruch 1, dadurch gekennzeichnet, daß die Staubabscheideelemente (13) von einer oder mehreren, gegebenenfalls zueinander parallel verlaufenden, auf der Rotorwelle (5) befestigten Schraubenwendel(n) (30) gebildet sind, die in Richtung der Umdrehungsrichtung der Rotorwelle (5) ansteigt (ansteigen) (Fig. 3).

3. Trockner nach Anspruch 1, dadurch gekennzeichnet, daß die Staubabscheideelemente (13) von einer oder mehreren, gegebenenfalls parallel zueinander verlaufenden in bezug auf die Rotorwelle (5) senkrecht oder schräg gestellten, durchbrochenen Scheibe(n) (31) gebildet sind (Fig. 8).

4. Trockner nach Anspruch 1, dadurch gekennzeichnet, daß die Staubabscheideelemente (13) von auf der Rotorwelle (5) durch die Fliehkraft ausschwenkbar gelagerten Flügeln (34) gebildet sind, deren Fläche in Richtung der Umdrehungsrichtung der Rotorwelle (5) ansteigt (Fig. 11, 12).

5. Trockner nach Anspruch 1, dadurch gekennzeichnet, daß die Staubabscheideelemente (13) von schraubenförmig angeordneten Flügeln oder Segmenten (29) gebildet sind, die in Umfangsrichtung der Rotorwelle (5) auf dieser höhenversetzt aufeinanderfolgend angeordnet sind und deren Fläche in Richtung der Umdrehungsrichtung der Rotorwelle (5) ansteigt (Fig. 5).

6. Trockner nach Anspruch 1, dadurch gekennzeichnet, daß die Staubabscheideelemente (13) mit der Rotorwelle (5) mit elastischen Halterungen (28), und/oder elastischen Lagern für starre oder elastische Halterungen (28) und/oder elastischen Lagern in den Halterungen (28) für die Staubabscheideelemente (13) verbunden sind (Fig. 5, 6).

7. Trockner nach einem der Ansprüche 1 bis 6, dadurch gekennzeichnet, daß zur Vermeidung der Kondensation bzw. Ablagerung der den Verteilerring (10) durchströmenden Dämpfe oder Gase oder von von diesen mitgeführten Feststoffen an den innen gelegenen Flächen des Verteilerringes der Innenraum und/oder die Innenwände des Verteilerringes (10) gegenüber seiner Außenwandung wärmeisoliert und/oder beheizbar sind und/oder die Innenwände des Verteilerringes (10) aus wärmeisolierendem Material bestehen.

8. Trockner nach Anspruch 7, dadurch gekennzeichnet, daß die die Außenwand und/oder Innenwand des Verteilerringes (10) und gegebenenfalls den Verteilerring (10) tragenden Stege (18) zumindest im Einspeisebereich (3) des Trockners (1) zumindest teilweise mit Kunststoff (23) beschichtet oder mit Kunststoffschichten oder -folien oder -platten verkleidet sind.

9. Trockner nach Anspruch 7, dadurch gekennzeichnet, daß der gegebenenfalls mehrteilige Verteilerring (10) im Einspeisebereich (3) des Trockners (1) an seiner Innen- und/oder Außenwand zumindest teilweise aus Kunststoff besteht.

10. Trockner nach einem der Ansprüche 7 bis 9, dadurch gekennzeichnet, daß als Kunststoff ein Silikonkunststoff oder ein Plastomer, vorzugsweise ein Fluorplastomer, verwendet wird.

11. Trockner nach einem der Ansprüche 7 bis 10, dadurch gekennzeichnet, daß der Kunststoff faserverstärkt ist.

12. Trockner nach einem der Ansprüche 7 bis 11, dadurch gekennzeichnet, daß im Ringkörper (19) des Verteilerringes (10) zumindest ein, sich über den Umfang des Verteilerringes (10) erstreckender, gegebenenfalls mit Wärmedämmmaterial, vorzugsweise Steinwolle oder Asbest, gefüllter Hohlraum (26) ausgebildet ist (Fig. 4a).

13. Trockner nach einem der Ansprüche 7 bis 12, dadurch gekennzeichnet, daß die gegebenenfalls aus Kunststoff oder Keramikmaterial bestehende Innenwand des Verteilerringes (10) im Abstand von der gegebenenfalls metallischen Außenwand angeordnet ist, wobei vorteilhafterweise zwischen den Wänden Wärmeisolationsmaterial vorgesehen ist.

14. Trockner nach einem der Ansprüche 1 bis 13, dadurch gekennzeichnet, daß die Staubabscheideelemente (13) und/oder deren Halterungen (28, 32, 33) und/oder die Rotorwelle (5) und/oder die Trocknerwand im Brüden-Dampfbereich (14) oberhalb des Verteilerringes (10) mit einem, gegebenenfalls faserverstärkten Kunststoff, vorzugsweise einem Silikonkunststoff oder einem Plastomer, insbesondere einem Fluorplastomer, zumindest teilweise beschichtet sind.

## Claims

1. A drier, in particular a vertical thin-layer drier, for drying flowable substances, having an inlet area, a heated drying area (C), an exhaust vapors area (A) and a rotor penetrating these areas, the rotor shaft (5) carrying a distributor ring (10) entrained in rotation in the inlet area (B) and extending up to the vicinity of the drier wall, the distributor ring (10) serving for the distribution of the flowable substances fed into the inlet area (B) over the interior wall of the drier and through whose interior space formed as a through passage the vapors and/or gases formed during the drying of the substances flow from the drying area (C) located underneath the distributor ring (10) into the exhaust vapors area (A) located above the distributor ring (10), characterized in that dust separator elements (13) are disposed in the drier in the exhaust vapors area (A) on the rotor shaft (5) and extend up to the vicinity of the drier wall for retaining solid particles entrained by exhaust vapors, which dust separator elements (13) have surfaces extending inclined or vertical in relation to the rotor axis and elastically connected to the rotor axis or movably supported on it and to which a shaking, oscillating and/or vibrating motion can be imparted by the rotation of the rotor shaft (5) during operation.

2. The drier according to claim 1, characterized in that the dust separator elements (13) are formed by one or a plurality of, optionally mutually parallel, helix (helices) (30) attached to the rotor shaft (5) and ascending in the direction of the rotating direction of the rotor shaft (5) (Fig. 3).

3. The drier according to claim 1, characterized in that the dust separator elements (13) are formed by one or a plurality of, optionally mutually parallel, perforated disk(s) (31) extending vertically or obliquely in relation to the rotor shaft (5) (Fig. 8).

4. The drier according to claim 1, characterized in that the dust separator elements (13) are formed by wings (34) disposed on the rotor shaft (5) so as to be pivotal outwards by centrifugal force, the surfaces of said wings ascending in the direction of the rotating direction of the rotor shaft (5) (Fig. 11, 12).

5. The drier according to claim 1, characterized in that the dust separator elements (13) are formed by helically arranged wings or segments (29) disposed in circumferential direction of the rotor shaft (5) staggered in relation to height one behind the other and whose surface ascends in the direction of the rotating direction of the rotor shaft (5) (Fig. 5).

6. The drier according to claim 1, characterized in that the dust separator elements (13) are connected to the rotor shaft (5) by means of elastic holding devices (28) and/or elastic bearings for rigid or elastic holding devices (28) and/or elastic bearings in the holding devices (28) for the dust separator elements (13) (Fig. 5, 6).

7. The drier according to any one of the claims 1 to 6, characterized in that for preventing the condensation or deposit of the vapors or gases flowing through the distributor ring (10) and the solids entrained by these on the inner surfaces of the distributor ring, the interior space and/or the inner surfaces of the distributor ring (10) are thermally insulated and/or heatable and/or the inner walls of the distributor ring (10) are made of thermally insulating material.

8. The drier according to claim 7, characterized in that the outer wall and or/inner wall of the distributor ring (10) and optionally the webs (18) supporting the distributor ring (10) are coated at least in the inlet area (3) of the drier (1) at least partially with plastic material (23) or with plastic material layers, foil or plates.

9. The drier according to claim 7, characterized in that the distributor ring (10) optionally consisting of several parts consists in the inlet area (3) of the drier (1) on its inner wall and/or outer wall at least partially of plastic material.

10. The drier according to any one of the claims 7 to 9, characterized in that the plastic material used is a plastic silicone material or a plastomer, preferably a fluoroplastomer.

11. The drier according to any one of the claims 7 to 10, characterized in that the plastic material is reinforced by means of fibers.

12. The drier according to any one of the claims 7 to 11, characterized in that at least one cavity (26) extending over the circumference of the distributor ring (10) and optionally filled with thermally insulating material, preferably rock wool or asbestos, is formed in the ring body (19) of the distributor ring (10) (Fig. 4a).

13. The drier according to any one of the claims 7 to 12, characterized in that the inner wall of the distributor ring (10) optionally consisting of plastic material or ceramics is arranged specially in relation to the optionally metallic outer wall, thermally insulating material conveniently being provided between the walls.

14. The drier according to any one of the claims 1 to 13, characterized in that the dust separator elements (13) and/or their holding devices (28, 32, 33) and/or the rotor shaft (5) and/or the drier wall in the exhaust vapors area (14) above the distributor ring (10) is (are) at least partially coated with an optionally fiber-reinforced plastic material, preferably a silicone plastic material or a plastomer, in particular a fluoroplastomer.

## Revendications

1. Sécheur, en particulier sécheur vertical à couche mince, pour le séchage de produits coulants, comportant une zone d'admission, une zone de séchage (C) chauffée et une zone de vapeurs (A) ainsi qu'un rotor traversant lesdites zones, l'arbre du rotor (5) supportant dans la zone d'admission (B) un répartiteur annulaire (10) qui tourne avec lui et dont la paroi externe se trouve à faible distance de la paroi de séchage, à l'aide duquel les matières coulantes introduites dans la zone d'admission (B) sont réparties sur la paroi intérieure du sécheur et dont l'espace intérieur forme une ouverture par laquelle passent les vapeurs et/ou les gaz se dégageant pendant le séchage, pour arriver de la zone de séchage (C) située au-dessous du répartiteur annulaire (10) dans la zone de vapeurs (A), située au-dessus du répartiteur annulaire (10), caractérisé en ce que des éléments de séparation des poussières (13) montés sur l'arbre du rotor (5) et arrivant à proximité de la paroi du sécheur, sont disposés dans la zone de vapeurs (A) du sécheur, pour retenir les particules solides véhiculées par les vapeurs chaudes dans le sécheur, lesdits éléments ayant une surface oblique ou perpendiculaire par rapport à l'axe du rotor et étant soit reliés élastiquement à l'arbre du rotor, soit montés par suspension mobile sur celui-ci, de sorte que la rotation de l'arbre du rotor (5) leur imprime un mouvement de secousses, un mouvement oscillant et/ou un mouvement vibratoire.

2. Sécheur selon la revendication 1, caractérisé en ce que les éléments de séparation des poussières (13) consistent en un ou plusieurs élément(s) hélicoïdal (hélicoïdaux) (30), disposés le cas échéant parallèlement les uns aux autres et fixé(s) sur l'arbre du rotor (5) selon une hélice ascendante dans le sens de rotation de l'arbre du rotor (5) (Fig. 3).

3. Sécheur selon la revendication 1, caractérisé en ce que les éléments de séparation des poussières (13) consistent en un ou plusieurs disque(s) présentant des ouvertures (31), disposés le cas échéant parallèlement les uns aux autres, perpendiculairement ou obliquement par rapport à l'arbre du rotor (5) (Fig. 8).

4. Sécheur selon la revendication 1, caractérisé en ce que les éléments de séparation des poussières (13) consistent en ailettes (34) articulées sur l'arbre du rotor (5) de manière à s'écarter sous l'effet de la force centrifuge et dont la surface est ascendante dans le sens de rotation de l'arbre du rotor (5) (Fig. 11, 12).

5. Sécheur selon la revendication 1, caractérisé en ce que les éléments de séparation des poussières (13) consistent en ailettes ou segments (29) de disposition hélicoïdale, se succédant décalés en hauteur sur le pourtour de l'arbre du rotor (5) et dont la surface est ascendante dans le sens de rotation de l'arbre du rotor (5) (Fig. 5).

6. Sécheur selon la revendication 1, caractérisé en ce que les éléments de séparation des poussières (13) sont reliés à l'arbre du rotor (5) par des fixations élastiques (28), et/ou des paliers élastiques pour fixations rigides ou élastiques (28) et/ou des paliers élastiques dans les fixations (28) des éléments de séparation des poussières (Fig. 5, 6).

7. Sécheur selon une des revendications 1 à 6, caractérisé en ce que pour éviter la condensation ou le dépôt des vapeurs ou des gaz traversant le répartiteur annulaire (10), ou des particules solides véhiculées par eux, sur les surfaces intérieures du répartiteur annulaire (10), l'espace intérieur et/ou les parois internes du répartiteur annulaire (10) sont isolées thermiquement de sa paroi externe et/ou chauffables et/ou les parois internes du répartiteur annulaire (10) sont faites d'un matériau calorifuge.

8. Sécheur selon la revendication 7, caractérisé en ce que la paroi externe et/ou la paroi interne du répartiteur annulaire (10) et le cas échéant les barres (18) supportant le répartiteur annulaire (10) sont revêtues au moins partiellement, pour le moins dans la zone d'admission (3) du sécheur (1), d'une matière plastique (23) ou de feuilles ou plaques enduites d'une matière plastique.

9. Sécheur selon la revendication 7, caractérisé en ce que dans la zone d'admission (3) du sécheur (1), le répartiteur annulaire (10) construit le cas échéant en plusieurs parties est formé, pour ce qui est de la paroi interne et/ou de sa paroi externe, au moins partiellement d'une matière plastique.

10. Sécheur selon une des revendications 7 à 10, caractérisé en ce que la matière plastique utilisée est une matière à base de silicones ou un plastomère, de préférence un fluoroplastomère.

11. Sécheur selon une des revendications 7 à 10, caractérisé en ce que la matière plastique est renforcée par fibres.

12. Sécheur selon une des revendications 7 à 11, caractérisé en ce que le corps (19) du répartiteur annulaire (10) présente au moins un espace creux (26) s'étendant sur toute la circonférence du répartiteur annulaire (10) et rempli le cas échéant d'un matériau calorifuge, de préférence de la laine minérale ou de l'amiante (Fig. 4a).

13. Sécheur selon une des revendications 7 à 12, caractérisé en ce que la paroi interne du répartiteur annulaire (10) consistant le cas échéant en matière plastique ou céramique, est disposée à une certaine distance de la paroi externe qui est le cas échéant une paroi métallique, un matériau calorifuge étant avantageusement placé entre les parois.

14. Sécheur selon une des revendications 7 à 13, caractérisé en ce que les éléments de séparation des poussières (13) et/ou leurs fixations (28, 32, 33) et/ou l'arbre du rotor (5) et/ou la paroi du sécheur dans la zone des vapeurs (14) au-dessus du répartiteur annulaire (10) sont revêtus au moins partiellement d'une matière plastique renforcée le cas échéant par fibres, de préférence une matière à base de silicones ou un plastomère, en particulier un fluoroplastomère.

Fig. 1

Fig. 2

Fig. 2a

Fig. 3

Fig. 3a

Fig. 4

Fig. 4a

Fig. 4b

Fig. 5

Fig. 6

Fig. 7

Fig. 8

Fig. 9

Fig. 10

Fig. 11

Fig. 12